# DEMANDE DE BREVET EUROPEEN

(11) **EP 0 743 231 A1**
(43) Date de publication de la demande: **20.11.1996**
(21) Numéro de dépôt: 96107477.0
(22) Date de dépôt: 10.05.1996
(51) Int. Cl.: B60S 1/38

(54) **Raclette d'essuyage pour un essuie-glace de véhicule automobile**

(30) Priorité: 17.05.1995 FR 9505952
(71) Demandeur: VALEO SYSTEMES D'ESSUYAGE, 78321 La Verrière (FR)
(72) Inventeur: Sortais, Jean-Luc, 63110 Beaumont (FR)
(74) Mandataire: Gamonal, Didier

(57) **Abrégé**

L'invention propose une raclette (10) d'essuyage pour un balai d'essuie-glace du type comportant un talon supérieur longitudinal (14) de fixation de la raclette (10) et une lame inférieure longitudinale (12) d'essuyage reliée au talon (14) de manière à pivoter par rapport à ce dernier autour d'un axe longitudinal et du type dans lequel, lors de l'inversion du sens de pivotement de la lame (12) par rapport au talon (14), au moins une surface (34) de la lame (12) vient en contact avec une portion en vis-à-vis (20) du talon, caractérisée en ce qu'il est prévu des moyens (48) pour réduire l'aire de contact entre ladite surface (34) de la lame (12) et la portion en vis-à-vis (20) du talon (14).

## Description

L'invention concerne une raclette d'essuyage pour un balai d'essuie-glace de véhicule automobile.

L'invention concerne plus particulièrement une raclette d'essuyage du tue comportant un talon souple supérieur longitudinal, renforcé, de fixation de la raclette et une lame inférieure longitudinale d'essuyage reliée au talon de manière à pivoter par rapport à ce dernier autour d'un axe longitudinal.

Une telle raclette d'essuyage est par exemple réalisée sous la forme d'un élément unique moulé par extrusion.

Lorsqu'une telle raclette équipe un essuie-glace du type à balayage alterné, et lors de l'inversion du sens de balayage, qu'il s'agisse d'un balayage en rotation ou d'un balayage linéaire, il se produit une inversion du sens de pivotement de la lame d'essuyage par rapport au talon d'essuyage au cours de laquelle une surface de la lame d'essuyage vient en contact avec une portion en vis-à-vis du talon et au cours de laquelle une surface de la lame d'essuyage vient en contact avec la vitre à essuyer.

Ces phénomènes d'inversion de sens de pivotement et de venue en contact seront explicités plus en détail dans la description détaillée qui va suivre.

Ces venues en contact ont pour conséquence de créer des chocs entre différentes surfaces qui sont générateurs de bruits nuisibles au confort d'utilisation du véhicule.

Ces bruits de fonctionnement lors des phases d'inversion ou de retournement de la lame d'essuyage sont particulièrement nuisibles en ce qu'ils revêtent, pour les passagers, un caractère répétitif et régulier.

La présente invention a pour but de proposer une nouvelle conception d'une raclette d'essuyage du type mentionné précédemment qui permet de remédier à cet inconvénient.

Dans ce but, l'invention propose une raclette d'essuyage caractérisée en ce qu'il est prévu des moyens pour réduire l'aire de contact entre ladite surface de la lame et la portion en vis-à-vis du talon.

Selon d'autres caractéristiques de l'invention :
- la lame est délimitée par une face supérieure horizontale sensiblement plane qui s'étend en regard d'une face inférieure horizontale sensiblement plane en vis-à-vis du talon ;
- la lame est reliée au talon par une bande longitudinale médiane de liaison qui s'étend verticalement entre lesdites faces supérieure et inférieure, et lesdits moyens pour réduire l'aire de contact sont agencés entre lesdites faces supérieure et inférieure ;
- les moyens comportent des parties en relief formées sur la face supérieure de la lame et/ou sur la face inférieure du talon ;
- les parties en relief sont des plots ;
- les parties en relief sont des nervures ;
- les parties en relief sont des lèvres déformables élastiquement agencées au voisinage des bords d'extrémité de la face supérieure de la lame et/ou de la face inférieure du talon ;
- les parties en relief sont délimitées par des encoches formées dans lesdites faces supérieure et/ou inférieure ;
- les encoches s'étendent sensiblement selon une direction transversale perpendiculaire à l'axe longitudinal de la raclette ;
- les encoches s'étendent sensiblement selon une direction inclinée par rapport à l'axe longitudinal de la raclette.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective d'un tronçon d'une raclette d'essuyage conforme à l'état de la technique ;
- la figure 2 est une vue similaire à celle de la figure 1 qui illustre la raclette en cours de balayage d'une vitre ;
- la figure 3 est une vue similaire à celle des figures 1 et 2 qui illustrent le phénomène de chocs au moment de l'inversion du sens de pivotement de la lame par rapport au talon de la raclette ;
- les figures 4 à 14 sont des vues schématiques partielles similaires à celles de la figure 1 qui illustrent différents modes de réalisation des moyens permettent de réduire les bruits résultant des chocs par réduction des aires de contact entre différentes surfaces de la raclette d'essuyage et entre cette dernière et la vitre à essuyer.

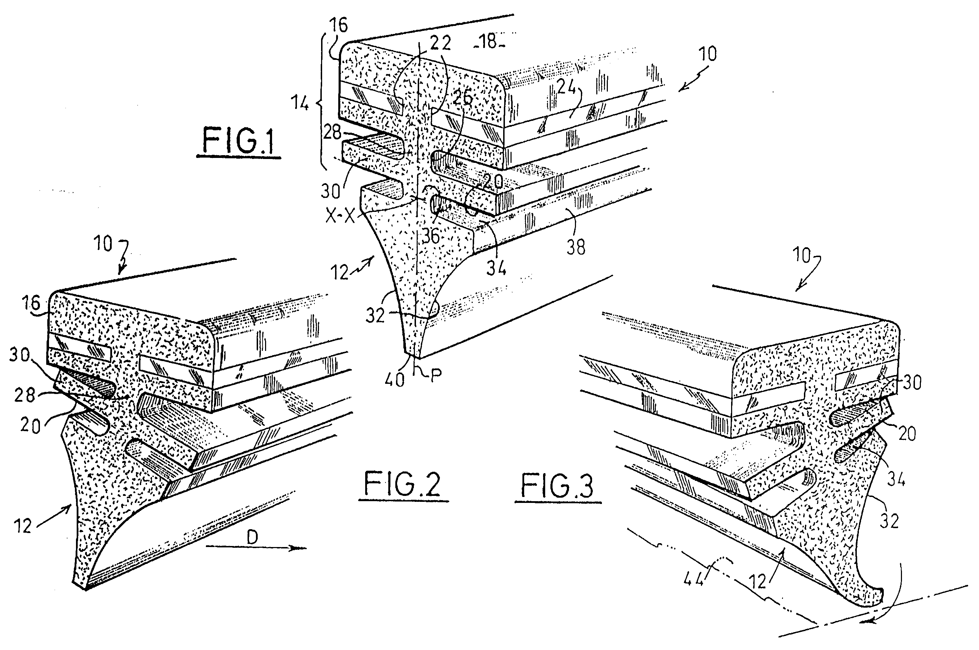

On a représenté sur la figure 1 une raclette d'essuyage 10 qui est constituée pour l'essentiel par un talon supérieur de fixation 14 et par une lame inférieure d'essuyage 12.

Les deux parties 12 et 14 sont réalisées venues de matière en une seule pièce moulée par extrusion dans un matériau élastomère.

Le talon supérieur 14 présente une forme générale parallélépipédique rectangle qui s'étend longitudinalement et qui est délimitée latéralement par deux faces opposées 16 parallèles à l'axe longitudinal général de la raclette 10 qui présente une symétrie de conception par rapport à un plan vertical médian P.

Le talon 14 est également délimité par une face plane horizontale supérieure 18 et par une face plane horizontale inférieure 20.

Chacune des faces 16 comporte deux rainures longitudinales supérieures 22 dont chacune reçoit une vertèbre de renfort 24 et deux rainures longitudinales inférieures 26 dont les fonds délimitent une bande 28 de liaison de la partie supérieure du talon 14 avec deux ailes latérales opposées 30.

Selon une conception connue, la lame inférieure 12 présente un profil en forme de flèche inversée qui est délimitée latéralement par deux faces longitudinales opposées 32 dont chacune présente une légère convexité tournée vers la vitre à essuyer.

La lame 12 est également délimitée à sa partie supérieure par une face horizontale supérieure 34 qui s'étend en vis-à-vis de la face horizontale inférieure 20 du talon 14.

La lame 12 est reliée de manière articulée au talon 14 par une bande longitudinale médiane de liaison 36 qui s'étend entre les faces horizontales en vis-à-vis 20 et 34 et qui permet à la lame 12 de pivoter par rapport au talon 14 autour d'un axe longitudinal X-X.

A sa partie supérieure, la lame d'essuyage 12 est également délimitée par deux facettes latérales parallèles et opposées 38 qui s'étendent verticalement dans le même plan que les faces latérales opposées 16 du talon 14.

Les faces longitudinales opposées 32 de la lame 12 se terminent à la partie inférieure par le bord longitudinal d'essuyage 40 de la raclette 10.

En fonctionnement de balayage, la raclette 10 présente la conformation illustrée sur la figure 2 dans laquelle la lame 12 est inclinée par rapport au talon 14 et dans laquelle seul le bord 40 est en contact avec la vitre à essuyer dans une direction de déplacement D.

En fin d'une course de balayage, il se produit une inversion de la direction D de balayage qui provoque différents chocs au niveau de la raclette d'essuyage 10.

Comme on peut le voir sur la figure 3, l'une des faces longitudinales 32 vient percuter la vitre à essuyer 44.

De même, une portion de la face horizontale supérieure 34 vient percuter la face horizontale inférieure 20 du talon 14, l'aile 30 pouvant elle-même venir percuter la portion en vis-à-vis de la partie supérieure du talon 14.

Ces différents chocs sont générateurs de bruits et l'invention a pour but de proposer des moyens pour supprimer, ou tout au moins réduire ces bruits nuisibles au confort des passagers.

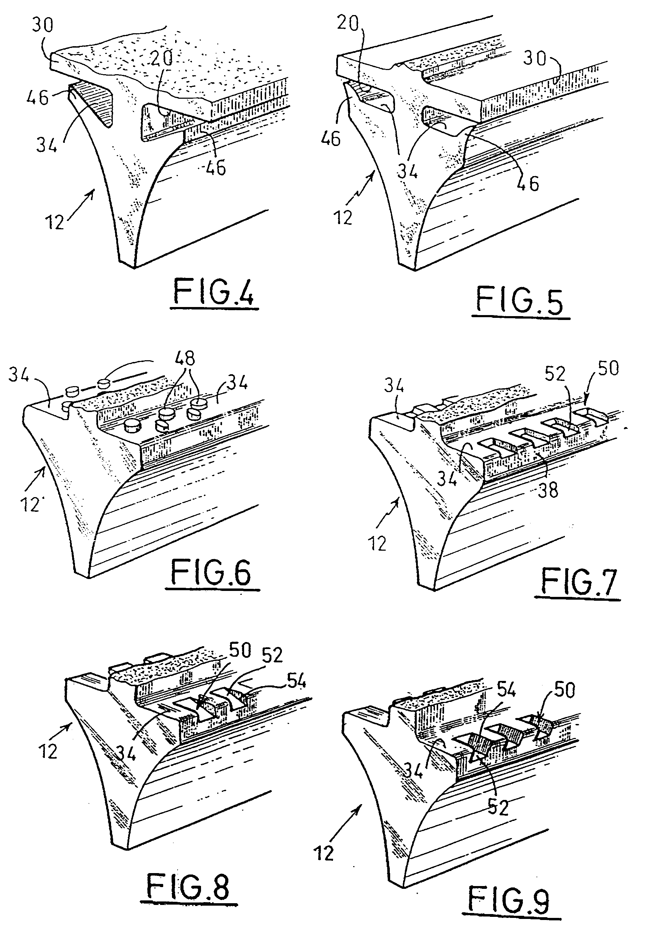

Aux figures 4 et 5, la partie supérieure de la lame d'essuyage 12 a été modifiée de manière que chacun des bords latéraux de la face horizontale supérieure 34 de la lame 12 soit équipé d'une lèvre déformable élastiquement 46 qui est susceptible de venir coopérer de manière progressive et régulière avec la portion en vis-à-vis de la face horizontale inférieure 20 des ailes 30 du talon 14.

Dans le cas de la figure 4, la face supérieure 34 est elle-même inclinée de manière à conférer une forme en V inversée à cette face supérieure pour réaliser deux lèvres 46 de plus grandes dimensions et de plus grande souplesse pour amortir encore davantage les phénomènes de chocs et d'impacts.

Dans le mode de réalisation illustré sur la figure 6, la face supérieure horizontale 34 de la lame d'essuyage 12 comporte une série de plots 48 répartis le long de la lame d'essuyage.

Lors des phases d'inversion du sens de pivotement de la lame 12 autour de l'axe X-X, ce sont les plots 48 qui viennent en contact avec la portion en vis-à-vis de la face horizontale inférieure 20 du talon supérieur de manière à réduire la surface de contact.

Toujours dans le but de réduire l'aire de contact entre la face supérieure 34 de la lame 12 et la face inférieure 20 du talon 14, on a représenté aux figures 7 à 10 différents modes de réalisation d'encoches 50 formées dans la face horizontale supérieure 34.

Dans le mode de réalisation illustré sur la figure 7, les encoches s'étendent selon une direction transversale perpendiculaire à l'axe de pivotement de la lame 12 et elles débouchent dans les facettes latérales 38 de la partie supérieure de la lame d'essuyage 12.

Le fond 52 des encoches 50 est parallèle au plan de la face horizontale supérieure 34.

Dans le cas de la figure 8, les fonds 52 des encoches 50 sont inclinés par rapport au plan de la face horizontale supérieure 34 de la lame 12.

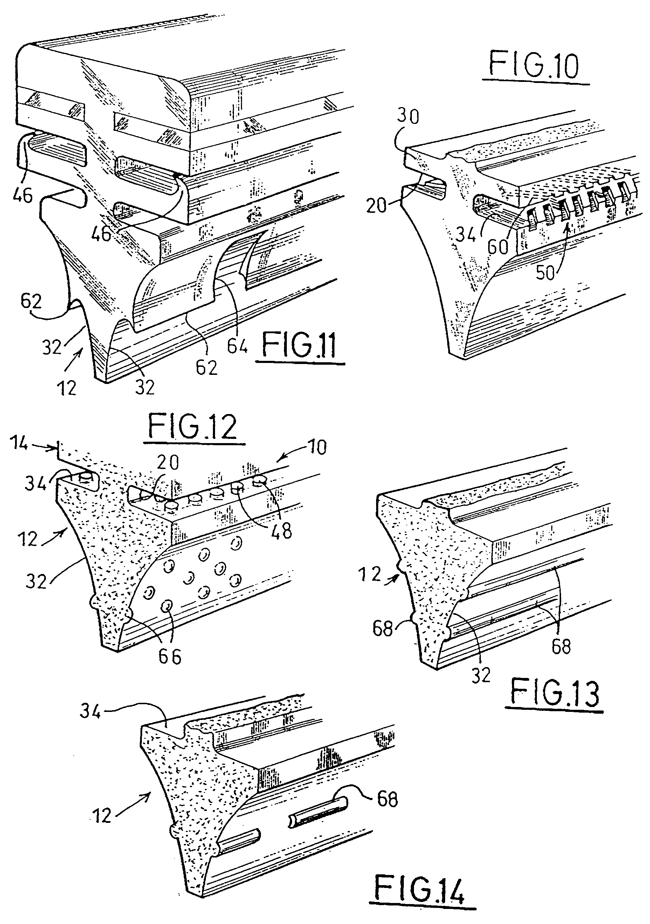

Aux figures 7 et 8, les bords transversaux et parallèles 54 de chaque encoche 50 sont verticaux et perpendiculaires au plan de la face horizontale supérieure 34 tandis que, à la figure 9, les bords transversaux 54 sont inclinés par rapport à un plan vertical.

Comme on l'a représenté sur la figure 10, il est également possible de prévoir des encoches 60 équivalentes aux encoches 50 mais qui sont formées dans la face horizontale inférieure 20 du talon supérieur, les encoches 60 pouvant être associées à des encoches 50 formées dans la face horizontale supérieure 34 de la lame 12.

Sur la figure 11, on a représenté des lèvres 46 sur les ailes 30 similaires à celles représentées à la figure 5 ainsi qu'un premier exemple de réalisation de moyens pour réduire l'aire de contact entre les faces longitudinales opposées 32 de la lame 12 et la vitre à essuyer.

Dans ce premier mode de réalisation, les moyens pour réduire l'aire de contact sont constitués par deux lèvres longitudinales 62 formées chacune sur une face longitudinale convexe 32.

Les lèvres 62 peuvent être réalisées sous la forme de tronçons de lèvres grâce à des découpes 64 réparties régulièrement le long des lèvres 62.

Lors de la phase d'inversion ou de retournement de la lame 12, ce sont les bords libres des lèvres 32 qui viennent en contact progressivement avec la vitre à essuyer réduisant ainsi les impacts et les bruits.

Dans le mode de réalisation illustré sur la figure 12, chacune des faces longitudinales opposées et convexes 32 est munie d'une série de plots 66 formés en relief.

Dans le mode de réalisation illustré sur la figure 13, les parties en relief sont réalisées sous la forme de nervures longitudinales 68 qui, dans l'exemple de réalisation de la figure 13, sont au nombre de deux et sont parallèles sur chacune des faces longitudinales convexes et opposées 32 de la lame 12.

Enfin, dans le mode de réalisation illustré sur la figure 14, les nervures 68 sont réalisées de manière interrompue pour constituer des tronçons de nervures réduisant encore davantage l'aire de contact en cas de choc avec la surface de la vitre à essuyer.

Les différentes variantes qui viennent d'être décrits peuvent être combinés et associés selon différentes combinaisons possibles et non représentés.

## Revendications

1. Raclette (10) d'essuyage pour un balai d'essuie-glace du type comportant un talon supérieur longitudinal (14) de fixation de la raclette (10) et une lame inférieure longitudinale (12) d'essuyage reliée au talon (14) de manière à pivoter par rapport à ce dernier autour d'un axe longitudinal (X-X) et du type dans lequel, lors de l'inversion du sens de pivotement de la lame (12) par rapport au talon (14), au moins une surface (34) de la lame (12) vient en contact avec une portion en vis-à-vis du talon, caractérisée en ce qu'il est prévu des moyens pour réduire l'aire de contact entre ladite surface (34) de la lame (12) et la portion en vis-à-vis (20) du talon (14).

2. Raclette d'essuyage selon la revendication 1, caractérisée en ce que la lame (12) est délimitée par une face supérieure horizontale (34) sensiblement plane qui s'étend en regard d'une face inférieure horizontale (20) sensiblement plane en vis-à-vis du talon (14), en ce que la lame (12) est reliée au talon (14) par une bande longitudinale médiane de liaison (36) qui s'étend verticalement entre lesdites faces supérieure (34) et inférieure (20), et en ce que lesdits moyens pour réduire l'aire de contact sont agencées entre lesdites faces supérieure (34) et inférieure (20).

3. Raclette d'essuyage selon la revendication 2, caractérisée en ce que lesdits moyens comportent des parties en relief formées sur la face supérieure (34) de la lame (12) et/ou sur la face inférieure (20) du talon (14).

4. Raclette d'essuyage selon la revendication 2, caractérisée en ce que les parties en relief sont des plots.

5. Raclette d'essuyage selon la revendication 2, caractérisée en ce que les parties en relief sont des nervures.

6. Raclette d'essuyage selon la revendication 2, caractérisée en ce que les parties en relief sont des lèvres longitudinales déformables élastiquement (46) agencées au voisinage des bords d'extrémité de la face supérieure (34) de la lame (12) et/ou de la face inférieure (20) du talon (14).

7. Raclette d'essuyage selon la revendication 2, caractérisée en ce que les parties en relief sont délimitées par des encoches (50) formées dans lesdites faces supérieure (34) et/ou inférieure (20).

8. Raclette d'essuyage selon la revendication 7, caractérisée en ce que les encoches (50) s'étendent sensiblement selon une direction transversale perpendiculaire à l'axe longitudinal de la raclette (10).

9. Raclette d'essuyage selon la revendication 7, caractérisée en ce que les encoches (50) s'étendent sensiblement selon une direction inclinée par rapport à l'axe longitudinal de la raclette (10).
